Europäisches Patentamt

European Patent Office

Office européen des brevets

(11) EP 0 859 659 B1

(19)

(12) EUROPÄISCHE PATENTSCHRIFT

(45) Veröffentlichungstag und Bekanntmachung des Hinweises auf die Patenterteilung:
01.12.1999 Patentblatt 1999/48

(21) Anmeldenummer: 96931068.9

(22) Anmeldetag: 10.09.1996

(51) Int. Cl.$^6$: **B01D 53/56**, B01D 53/86

(86) Internationale Anmeldenummer:
PCT/EP96/03971

(87) Internationale Veröffentlichungsnummer:
WO 97/10042 (20.03.1997 Gazette 1997/13)

(54) **VERFAHREN ZUM ENTFERNEN VON STICKSTOFFOXIDEN AUS EINEM DIESE ENTHALTENDEN GASSTROM**

METHOD OF REMOVING NITROGEN OXIDES FROM A GAS FLOW

PROCEDE POUR ELIMINER LES OXYDES D'AZOTE CONTENUS DANS UN COURANT DE GAZ

(84) Benannte Vertragsstaaten:
**DE FR GB IT**

(30) Priorität: **12.09.1995 DE 19533715**

(43) Veröffentlichungstag der Anmeldung:
**26.08.1998 Patentblatt 1998/35**

(73) Patentinhaber:
**BASF AKTIENGESELLSCHAFT
67056 Ludwigshafen (DE)**

(72) Erfinder:
• **FETZER, Thomas
D-67346 Speyer (DE)**
• **WAGNER, Eckhart
D-67133 Maxdorf (DE)**
• **RÖTH, Emil
D-67098 Bad Dürkheim (DE)**
• **RUPPEL, Wilhelm
D-67227 Frankenthal (DE)**
• **WISTUBA, Hermann
D-68259 Mannheim (DE)**
• **OTTO, Bernhard
D-67117 Limburgerhof (DE)**
• **SCHUMACHER, Volker
D-67227 Frankenthal (DE)**
• **BÜRGER, Gert
D-68199 Mannheim (DE)**

(74) Vertreter:
**Isenbruck, Günter, Dr. et al
Patent- und Rechtsanwälte,
Bardehle-Pagenberg-Dost-Altenburg-Geissler-
Isenbruck
Theodor-Heuss-Anlage 12
68165 Mannheim (DE)**

(56) Entgegenhaltungen:
EP-A- 0 625 369          DE-A- 4 308 940
US-A- 4 115 516          US-A- 4 387 082
US-A- 5 300 269

• NITROGEN, Nr. 207, Januar 1994, LONDON,
Seiten 33-40, XP000423568 "Cleaner nitric acid
plant tail gas"

**Beschreibung**

Die Erfindung betrifft ein Verfahren zum Entfernen von Stickstoffoxiden wie NO, $NO_2$ und $N_2O$ aus einem diese enthaltenden Gasstrom. Stickstoffoxide entstehen als Nebenprodukte bei vielen Prozessen, bei denen $HNO_3$ in flüssiger Phase als Oxidationsmittel eingesetzt wird. Insbesondere bei der Umsetzung von Alkoholen, Aldehyden und Ketonen, wie z.B. bei der Umsetzung von Cyclohexanol und Cyclohexanon zu Adipinsäure, von Acetaldehyd zu Glyoxal oder von Glyoxal zu Glyoxylsäure, wie auch bei der Herstellung von Nikotinsäure und Hydroxylaminen werden beispielsweise beträchtliche Mengen an $N_2O$ neben anderen Stickstoffoxiden freigesetzt.

In einem im Jahr 1991 in der Zeitschrift Science, 251 (1991), Seite 932 veröffentlichten Artikel zeigen Thiemens und Trogler auf, daß $N_2O$ ein gewisses Schädigungspotential für die Erdatmosphäre zukommt. $N_2O$ gilt in der Stratosphäre als eine wesentliche Quelle für NO, welches wiederum wesentlichen Einfluß auf den Abbau von Ozon in der Stratosphäre hat. Zudem gilt $N_2O$ als Treibhausgas, wobei das Erderwärungspotential von $N_2O$ etwa 290 mal größer sein soll als das von $CO_2$.

In den letzten Jahren wurden eine Vielzahl von Druckschriften veröffentlicht, die sich mit der Verminderung der durch antropogene Tätigkeiten bedingten $N_2O$-Emissionen beschäftigen.

In einer Vielzahl von Patenten werden Katalysatoren zur Reduktion bzw. Zersetzung von $N_2O$ beschrieben, beispielsweise in der DE 43 01 470, DE 42 24 881, DE 41 28 629, WO93/15824, EP 625369, WO94/27709, US 5,171,553.

In der US 5,200,162 ist beschrieben, daß die exotherme Reaktion bei der Zersetzung von $N_2O$ zu Stickstoff und Sauerstoff zu einer Vielzahl von Verfahrensschwierigkeiten führen kann, die mit hohen Verfahrenstempraturen verbunden sind. Ein Verfahren zur Zersetzung von $N_2O$ in einem Gasstrom ist beschrieben, wobei ein $N_2O$-haltiger Gasstrom unter $N_2O$-Zersetzungsbedingungen mit einem Katalysator zur Zersetzung von $N_2O$ in Stickstoff und Sauerstoff in Kontakt gebracht wird, wobei ein Anteil des Auslaßgases, dessen Gehalt an $N_2O$ vermindert ist, zunächst gekühlt wird und dann in die $N_2O$-Zersetzungszone zurückgeführt wird. Es wird beschrieben, daß bei $N_2O$-haltigen Abfallgasströmen, die zusätzlich $NO_x$ enthalten, es oft sehr wünschenswert ist, den Gasstrom vorzubehandeln, um $NO_x$ zu entfernen vor der $N_2O$-Zersetzungszone durch selektive Reduktion von $NO_x$ mit Ammoniak in Gegenwart von Sauerstoff.

In "Abatement of $N_2O$-emissions produced in the adipic acid industry," Environmental Progress, Band 13, Nr. 2, Mai 1994, Seiten 134-137 beschreiben Reimer, Slaten, Seapan, Lower und Tomlinson ein Boilergasverbrennungssystem (boiler gas reburn system), das mit selektiver nicht-katalytischer Reduktion (selective non-catalytic reduction, SNCR) gekoppelt ist zur Zerstörung von $N_2O$. Ein Flußschema zur katalytischen Zersetzung von $N_2O$ ist gezeigt, in dem eine Stufe mit einem $N_2O$-Zersetzungskatalysator gekoppelt ist mit einer Stufe mit einem $NO_x$-Verminderungs-SCR-Katalysator.

In Ullmanns Encyclopedia of Industrial Chemistry, 5, Auflage, Band A17, 1991, Seiten 293-339 ist die Herstellung $HNO_3$ durch Verbrennung von Ammoniak und Absorption der Verbrennungsprodukte in Wasser beschrieben. Nicht selektive katalytische Reduktionsverfahren (non selective catalytic reduction, NSCR) und selektive katalytische Reduktionsverfahren (selective catalytic reduction, SCR) können zur Behandlung der Abfallgase aus dem Verfahren zur $HNO_3$-Herstellung eingesetzt werden.

Aufgabe der vorliegenden Erfindung ist die Bereitstellung eines Verfahrens zum Entfernen von Stickstoffoxiden aus einem diese enthaltenden Gasstrom.

Eine weitere Aufgabe der Erfindung ist die Bereitstellung eines Verfahrens zum Entfernen von Stickstoffoxiden aus einem diese enthaltenden Gasstrom, der sowohl größere Mengen an $N_2O$ als auch an anderen Stickstoffoxiden aufweist.

Eine weitere Aufgabe der Erfindung ist die Bereitstellung eines Verfahrens zum Entfernen von Stickstoffoxiden aus einem diese enthaltenden Gasstrom, wobei Salpetersäure ($HNO_3$) gewonnen werden soll.

Eine weitere Aufgabe der Erfindung ist die Bereitstellung eines Verfahrens zum Entfernen von Stickstoffoxiden aus einem diese enthaltenden Gasstrom, wobei das Verfahren unter einfachen Verfahrensbedingungen durchzuführen ist.

Eine weitere Aufgabe der Erfindung ist die Bereitstellung einer Vorrichtung für die vorstehend genannten Verfahren.

Die Aufgaben der Erfindung werden gelöst durch ein Verfahren zum Entfernen von Stickstoffoxiden aus einem diese enthaltenden Gasstrom, umfassend das Leiten des Gasstroms

(A) durch eine Stufe zur Absorption der Stickstoffoxide außer $N_2O$ in einem Absorptionsmittel, oder Umsetzung der Stickstoffoxide außer $N_2O$ mit einem Absorptionsmittel bei einem Druck von 1,5 bis 20 bar und

(B) durch eine Stufe zur Verminderung des $N_2O$-Gehalts, vorzugsweise unter Nutzung des im Verfahrensschritt A vorherrschenden Druckniveaus, und nach den Stufen A und B durch

(C) eine Stufe zur Reduktion von Stickstoffoxiden außer $N_2O$,
wobei der Gasstrom zuerst durch Stufe A und dann durch Stufe B geleitet wird.

Die Aufgaben der Erfindung werden außerdem gelöst durch eine

Vorrichtung zum Entfernen von Stickstoffoxiden aus einem diese enthaltenden Gasstrom, umfassend

(a) eine Absorptionseinheit zur Absorption der Stickstoffoxide außer $N_2O$ in einem Absorptionsmittel oder zur Umsetzung der Stickstoffoxide außer $N_2O$ mit einem Absorptionsmittel

(b) eine Verfahrenseinheit zur Verminderung des $N_2O$-Gehaltes und

(c) eine Reduktionseinheit zur Reduktion von Stickstoffoxiden außer $N_2O$,
wobei der Gasstrom nacheinander durch die Stufen (a), (b) und (c) geleitet wird.

Der Ausdruck "Stickstoffoxide", wie er in der Beschreibung und den Patentansprüchen verwendet wird, bezeichnet die Oxide des Stickstoffs, insbesondere Distickstoffoxid ($N_2O$), Stickstoffmonoxid (NO), Distickstofftrioxid ($N_2O_3$), Stickstoffdioxid ($NO_2$), Distickstofftetroxid ($N_2O_4$), Distickstoffpentoxid ($N_2O_5$), Stickstoffperoxid ($NO_3$).

Die Erfindung betrifft insbesondere ein Verfahren zum Entfernen von Stickstoffoxiden aus Gasströmen, wie sie beispielsweise als Abgasströme bei Verfahren zur Herstellung von Adipinsäure, Salptersäure, Hydroxylaminderivaten, Caprolactam, Glyoxal, Methylglyoxal, Glyoxylsäure oder bei Verfahren zur Verbrennung stickstoffhaltiger Materialien anfallen.

Bei den vorstehend erwähnten Verfahren wie auch bei anderen Verfahren zur Oxidation organischer Verbindungen mit Salpetersäure entstehen Stickstoffoxide enthaltende Reaktionsprodukte. So entsteht bei der Herstellung von Adipinsäure durch Oxidation eines Cyclohexanon/Cyclohexanol-Gemisches ein Abgas mit beispielsweise folgender Zusammensetzung:

| | |
|---|---|
| $NO_2$ | 20 Vol.-% |
| $N_2O$ | 23 Vol.-% |
| $O_2$ | 10 Vol.-% |
| $CO+CO_2$ | 2 Vol.-% |
| $N_2+Ar$ | 45 Vol.-% |

Stufe A

Die Absorption der Stickstoffoxide außer $N_2O$ in einem Absorptionsmittel bzw. die Umsetzung der Stickstoffoxide außer $N_2O$ mit einem Absorptionsmittel kann mit beliebigen geeigneten Absorptionsmitteln erfolgen. Bevorzugt wird Wasser als Absorptionsmittel verwendet, wobei die Absorption vorzugsweise in Gegenwart von freiem Sauerstoff erfolgt und die Stickstoffoxide außer $N_2O$ vorzugsweise zu $HNO_3$ umgesetzt werden.

Dabei wird beispielsweise Stickstoffmonoxid zu Stickstoffdioxid oxidiert und Stickstoffdioxid in Wasser absorbiert zur Bildung von $HNO_3$. Ein solches Verfahren ist beschrieben in Ullmann's Encyclopedia of Industrial Chemistry, 5. Auflage, Band A17, 1991, Seiten 293-339.

Das Verfahren zur Umsetzung zu Salpetersäure kann durch zwei exotherme Reaktionsschritte charakterisiert werden:

Oxidation von Stickstoffmonoxid mit Luftsauerstoff zu Stickstoffdioxid nach:

$$2NO+O_2 \rightarrow 2NO_2 \qquad (I)$$

Absorption von Stickstoffdioxid in Wasser und Reaktion nach:

$$3NO_2+H_2O \rightarrow 2HNO_3+NO \qquad (II)$$

Die Reaktionen werden durch hohe Drücke und tiefe Temperaturen begünstigt. Es werden Drücke von 1,5-20 bar angewendet, vorzugsweise 3 bis 12 bar, besonders bevorzugt 5 bis 10 bar.

Die Gaseingangstemperatur beim Eintritt in Stufe A beträgt vorzugsweise 10 bis 100°C, besonders bevorzugt 20-60°C, insbesondere 30 bis 40°C.

Die aus der Oxidation von Alkoholen, Aldehyden und Ketonen resultierenden Gasströme enthalten oft $NO_2$ in einer Konzentration von mehr als 1 Vol.-%, so daß das $NO_2$ nicht als Verunreinigung, sondern als Wertstoff angesehen werden kann und deshalb durch Umsetzung mit Wasser zu Salpetersäure überführt werden kann.

Die Umsetzung kann in Absorptionskolonnen erfolgen, wie sie beispielsweise in Ullmann, aaO, beschrieben sind.

Die bei der exothermen Umsetzung entstehende Wärme kann zur Erzeugung von Prozessdampf genutzt werden und/oder zur Aufheizung der Stickstoffoxide enthaltenden Gasströme, beispielsweise in einem Gas/Gas-Wärmetauscher.

Stufe B

Stufe B ist eine Stufe zur Verminderung des $N_2O$-Gehaltes.

Die Verminderung des $N_2O$-Gehaltes kann durch thermische und/oder durch katalytische Zersetzung erfolgen. Die Verfahrensführung kann adiabatisch oder isotherm durchgeführt werden, vorzugsweise unter Nutzung des im Verfahrens A vorherrschenden Druckniveaus.

Die Entfernung des $N_2O$ kann beispielsweise

heterogenkatalytisch auf verschiedene Arten durchgeführt werden. Bei der adiabatischen Reaktionsführung, bei der die durch die Exothermie der Zersetzungsreaktion freiwerdende Wärmemenge zur Aufheizung des Katalysatorbettes genutzt wird, beträgt die Gaseingangstemperatur beim Eintritt in Stufe B 200-700°C, vorzugsweise 300-600°C, bevorzugt 400-550°C besonders bevorzugt 430-550°C, insbesondere 450-500°C. Die Gaseingangstemperatur kann von der Aktivität des Katalysators abhängen.

Um die thermische Bildung von $NO_x$ zu minimieren und den verwendeten Katalysator vor Zerstörung durch zu hohe Temperaturen (z.B. durch Sinterung) zu schützen, sollte die Temperatur des Gasstroms am Austritt aus dem Reaktor (Stufe B) 800°C nicht wesentlich überschreiten. Dies kann beispielsweise dadurch erreicht werden, daß die Konzentration von $N_2O$ im Gasstrom beim Eintritt in Stufe B nicht mehr als 40 Vol.-%, vorzugsweise 0,1 bis 20 Vol.-%, besonders bevorzugt 0,5 bis 15 Vol.-%, insbesondere 1 bis 13 Vol.-% beträgt. Gasströme umfassen aber oft $N_2O$-Gehalte von > 20 Vol.-%.

Eine Verminderung der $N_2O$-Konzentration kann beispielsweise dadurch erreicht werden, daß ein im wesentlichen $N_2O$-freier Gasstrom vor der Stufe B dem Gasstrom zugemischt wird. Das Zumischen kann auch vor der Stufe A erfolgen, sofern der Gasstrom zuerst durch Stufe A geleitet wird. Als im wesentlichen $N_2O$-freier Gasstrom kann der die Stufe B verlassende oder, wie nachstehend ausgeführt, ggf. der die Stufe C verlassende Gasstrom und/oder ein freien Sauerstoff enthaltender Gasstrom und/oder ein Prozessgas verwendet werden.

Die $N_2O$-Entfernung kann auch isotherm durchgeführt werden. Dies ist beispielsweise in einem Rohrbündelrektor mit Salzbad- oder mit Metallbadkühlung möglich. Dieser Prozess ist dadurch gekennzeichnet, daß die Temperatur des Gasstroms beim Austritt aus dem Reaktor (Stufe B) der Temperatur des Salzbades bzw. Metallbades entspricht und die Salzbzw. Metallschmelze die durch die $N_2O$-Zersetzungsreaktion freiwerdende Wärmemenge aufnimmt. Die Salzbad- bzw. Metallbadtemperatur beträgt dabei vorzugsweise 400-650°C oder entspricht der Temperatur der adiabatischen Reaktionsführung. Der Gasstrom kann entweder vor der Stufe B durch einen Wärmetauscher, wie einen Gas/Gas-Wärmetauscher oder direkt im Salzbad- bzw. Metallbadreaktor der Stufe B aufgeheizt werden.

Außerdem ist die Entfernung von $N_2O$ (Zersetzung) in einer Wirbelschicht möglich.

## Katalysatoren

Für die $N_2O$-Entfernung durch katalytische Zersetzung sind beispielsweise die in den DE 43 01 470, DE 42 24 881, DE 41 28 629, WO93/15824, EP 625 369, WO94/27709, US 5,171,553 beschriebenen Katalysatoren geeignet. Geeignete Katalysatoren können beispielsweise aus CuO, ZnO und $Al_2O_3$ bestehen oder zusätzlich Ag enthalten. Es können Katalysatoren mit Ag als aktiver Komponente, aufgebracht auf einen gamma-$Al_2O_3$-Träger verwendet werden. Weitere Beispiele für verwendbare Katalysatoren sind solche mit CoO und/oder NiO auf einem $ZrO_2$-Träger. Der Einsatz von zeolithischen Katalysatoren, beispielsweise Mordeniten, die in der $H^+$- oder $NH_4^+$-Form vorliegen und gegebenenfalls mit V, Cr, Fe, Co, Ni, Cu und/oder Bi ausgetauscht sind, ist ebenfalls möglich.

Weiterhin geeignet sind Katalysatoren, die aus Zeolithen mit einem $SiO_2/Al_2O_3$-Verhältnis von mindestens 550 bestehen, z.B. beta-Zeolith, ZSM-5, 4-Zeolith, Mordenit oder Chabazit, und in der $H^+$- oder $NH_4^+$-Form vorliegen und gegebenenfalls mit Alkali-, Erdalkali-, Übergangsmetallen oder Elementen der seltenen Erde ausgetauscht sind, wobei Kobalt als besonders geeignet bevorzugt sein kann.

Ebenfalls verwendbar sind Katalysatoren auf Zeolith-Basis, die beispielsweise mit Cu, Co, Rh, Pd oder Ir ausgetauscht sind.

Andere Katalysatoren, die die Reduktion bzw. Zersetzung von $N_2O$ erlauben, sind ebenfalls verwendbar.

Neben der katalytischen Reduktion bzw. Zersetzung von $N_2O$ ist auch die thermische Zersetzung möglich, beispielsweise in einem Regenerativ-Wärmetauscher (Thermoreaktor).

## Stufe C

Der Gasstrom wird nach den Stufen A und B durch eine Stufe C zur Reduktion von Stickoxiden außer $N_2O$ geleitet.

Bei der Zersetzung von $N_2O$ in Stufe B können unter Umständen Stickstoffoxide $NO_x$ gebildet werden. Diese gebildeten Stickstoffoxide können vorzugsweise in der Stufe C entfernt werden.

Stufe C dient der Reduktion von Stickstoffoxiden außer $N_2O$.

Der Gasstrom kann in Stufe C beispielsweise mittels der selektiven katalytischen Reduktion (selective catalytic reduction, SCR) umgesetzt werden. Dabei werden die Stickstoffoxide mit Ammoniak als Reduktionsmittel an Katalysatoren umgesetzt. Beispielsweise können DENOX-Katalysatoren verwendet werden. Die Stickstoffoxide werden dabei zu Stickstoff und Wasser umgesetzt.

Ebenfalls als Stufe C verwendbar ist eine Stufe zur nicht selektiven Reduktion (non selective catalytic reduction, NSCR) mit Katalysatoren. Dabei werden Kohlenwasserstoffe zur Reduktion der Stickstoffoxide verwendet und Katalysatoren, die Edelmetalle enthalten.

SCR- und NSCR-Verfahren sind beispielsweise in Ullmann's Encyclopedia of Chemical Technology, a.a.O., beschrieben.

Als Katalysatoren in diesem Verfahren können beliebige geeignete Katalysatoren eingesetzt werden. Beispielsweise können Katalysatoren für nicht-selektive Reduktionsverfahren auf Platin, Vanadiumpentoxid, Eisenoxid oder Titan basieren. Bei der selektiven katalytischen Reduktion können beispielsweise Katalysatoren mit einem Gehalt an Edelmetallen, wie Pt, Rh, Ru, Pd und/oder Metallen der Eisengruppe, wie Fe, Co, Ni verwendet werden. Außerdem können beispielsweise Vanadiumpentoxid, Wolframoxid oder Molybdänoxid verwendet werden. Ein weiterer geeigneter Katalysator ist Vanadiumpentoxid auf einem Aluminiumoxid-Träger.

Beim nicht selektiven Reduktionsverfahren können geeignete Kohlenwasserstoffe, wie Erdgas, Propan, Butan, Naphtha, aber auch Wasserstoff verwendet werden.

Die Temperatur des Gasstroms beim Eintritt in Stufe C kann beispielsweise 150-500°C betragen, vorzugsweise 200-350°C, besonders bevorzugt 260-300°C.

Erfindungsgemäß wurde gefunden, daß die Umsetzungen der Stufen A, B und C vorzugsweise auf einer Druckstufe durchgeführt werden können. Das bedeutet, daß der Druck des Gasstroms zwischen den einzelnen Stufen nicht zusätzlich wesentlich erhöht oder vermindert wird. Der Druck beträgt mindestens 3 bar, vorzugsweise 3 bis 20 bar, besonders bevorzugt 5 bis 10 bar.

Die Stufen A, B, und C können somit in einem integrierten Druckapparat angeordnet werden, der aus den zwei bzw. drei Reaktoren besteht, d.h. als eine integrierte Einheit, in der der Gasstrom vor dem Eintritt in eine der Stufen auf den Ausgangsdruck gebracht wird, beispielsweise durch Verdichten, und zwischen den einzelnen Stufen keine weiteren Vorrichtungen vorgesehen sind, mit denen der Druck des Gasstroms wesentlich erhöht oder vermindert wird. Beim Leiten des Gasstroms durch die Stufen kann der Druck im Gas variieren in Abhängigkeit der verwendeten Stufen. Vorzugsweise wird darüber hinaus der Druck des Gasstroms jedoch nicht verändert. Nach dem Auslaß der letzten Stufe kann der Gasstrom auf Atmosphärendruck gebracht werden, beispielsweise mittels einer Entspannungsturbine.

Die Möglichkeit, das Gesamtverfahren bei einem Druckniveau auszuführen, ermöglicht eine einfache Verfahrensführung und einen vereinfachten Aufbau der gesamten Vorrichtung zum Entfernen von Stickstoffoxiden. Die Verfahrensführung kann hierdurch sehr vereinfacht werden.

In einer bevorzugten Ausführungsform wird der Gasstrom durch die Stufen A, B, C in dieser Reihenfolge geleitet, vor dem Eintritt in Stufe A mit Luft und/oder einem die Stufe B oder C verlassenden Gasstrom und/oder einem Prozessgas gemischt, so daß vorzugsweise der Gehalt an $N_2O$ nicht mehr als 20 Vol.-% beträgt.

Der Gasstrom wird in Stufe A in einer Absorptionskolonne im Gegenstrom mit Wasser oder wässrigen Lösungen von z.B. Salpetersäure in Berührung gebracht zur Bildung von $HNO_3$ und die gebildete $HNO_3$ am Sumpf der Kolonne entnommen,

sodann der verbleibende Gasstrom auf eine Temperatur von 200 bis 700°C, vorzugsweise 450-500°C gebracht und in Stufe B in einem Festbett mit einem Katalysator zur katalytischen Zersetzung von $N_2O$ in Berührung gebracht,

der verbleibende Gasstrom sodann auf eine Temperatur von 150-500°C, vorzugsweise 260-300°C gebracht und in Stufe C einer katalytischen Reduktion unterworfen.

Die in den einzelnen Stufen freiwerdende Reaktionswärme kann zur Erzeugung von Dampf und mechanischer Antriebsenergie genutzt werden. Beispielsweise kann der Gasstrom vor Stufe A mit einem Verdichter (V1) auf einen Druck von 1,5 bis 20 bar abs. gebracht werden und nach Stufe C mittels einer Expansionsturbine (T1) auf Umgebungsdruck gebracht werden, wobei die in der Expansionsturbine (T1) freiwerdende Energie, ggf. zusammen mit weiterer Energie (M), wie sie beispielsweise durch einen Motor bereitgestellt werden kann, dem Verdichter (V1) zugeführt wird.

Die in den einzelnen Reaktionsstufen freiwerdende Energie kann auch zum Vorwärmen des Gasstroms verwendet werden.

Beispielsweise kann der Gasstrom vor dem Eintritt in Stufe A in einem Wärmetauscher (WT1) mit dem aus Stufe A austretenden Gasstrom gekühlt werden. Ebenso kann der Gasstrom vor dem Eintritt in Stufe B in einem Wärmetauscher (WT3) mit dem aus Stufe B austretenden Gasstrom erwärmt werden. Zudem kann der Gasstrom nach dem Wärmetauscher (WT1) vor dem Eintritt in Stufe A mit einem weiteren Wärmetauscher (WT2) zusätzlich weiter abgekühlt werden auf die gewünschte Temperatur. Weiterhin kann der Gasstrom nach dem Wärmetauscher (WT3) vor dem Eintritt in Stufe C mit einem Wärmetauscher (WT4) zusätzlich weiter abgekühlt werden.

Die Erfindung betrifft neben dem Verfahren zum Entfernen von Stickstoffoxiden aus einem diese enthaltenden Gasstrom auch eine Vorrichtung für dieses Verfahren. Die Vorrichtung umfaßt die vorstehend beschriebenen Stufen A, B, C in dieser Reihenfolge.

Die einzelnen Stufen sind dabei derart mit geeigneten Leitungen verbunden, daß der Gasstrom nacheinander durch die Stufen geleitet werden kann.

Vorzugsweise weist die Vorrichtung zum Entfernen von Stickstoffoxiden aus einem diese enthaltenden Gasstrom vor der ersten Stufen einer Vorrichtung auf, mit der der Gasstrom auf einen gewünschten Druck gebracht werden kann, und keine weiteren Vorrichtungen zur zusätzlichen wesentlichen Erhöhung oder Verminderung des Drucks des Gasstroms zwischen den einzelnen Stufen.

In einer bevorzugten Ausführungsform weist die Vorrichtung die wie vorstehend beschriebenen Verdichter (V1) und Expansionsturbine (T1) auf, sowie einen Motor (M), wie vorstehend beschrieben.

In einer weiteren bevorzugten Ausführungsform der Vorrichtung weist diese die wie vorstehend beschrieben angeordneten Wärmetauscher (WT1) und (WT3) auf.

In einer weiteren bevorzugten Ausführungsform der Vorrichtung weist diese die wie vorstehend beschrieben angeordneten Wärmetauscher (WT2) und (WT4) auf.

Die Erfindung betrifft auch die Verwendung der vorstehend beschriebenen Vorrichtung zum Entfernen von Stickstoffoxiden aus einem diese enthaltenden Gasstrom. Dabei umfaßt der Stickstoffoxide enthaltende Gasstrom vorzugsweise einen Abgasstrom aus Verfahren zur Herstellung von Adipinsäure, Salpetersäure, Hydroxylaminderivaten oder Caprolactam, oder aus Verfahren zur Verbrennung stickstoffhaltiger Materialien.

Die Erfindung betrifft zudem die Verwendung der wie vorstehend beschriebenen Vorrichtung zur Herstellung von $HNO_3$.

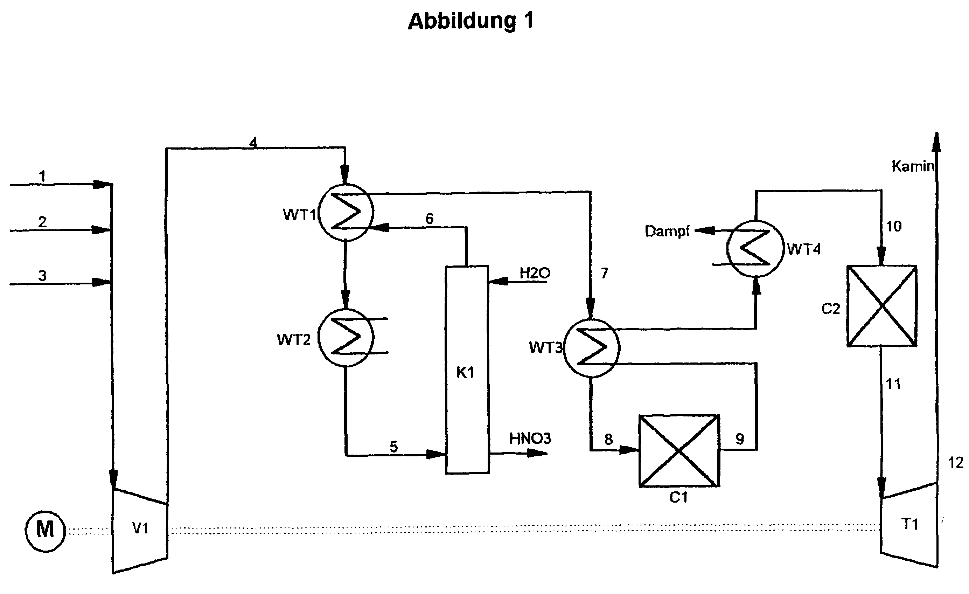

Nachstehend ist eine bevorzugte Vorrichtung gemäß der Erfindung sowie ein bevorzugtes Verfahren gemäß der Erfindung beschrieben mit Hinblick auf die Zeichnung, die schematisch eine erfindungsgemäße Vorrichtung darstellt.

Folgende Bezugszeichen sind in der Zeichnung aufgeführt:

K1: Absorptionskolonne (Stufe A)
C1: $N_2O$-Spaltreaktor (Stufe B)
C2: Reaktor zur katalytischen $NO_x$-Reduktion (Stufe C)
WT1: Wärmetauscher 1
WT2: Wärmetauscher 2
WT3: Wärmetauscher 3
WT4: Wärmetauscher 4
V1: Verdichter
T1: Expansionsturbine
M: Motor

Die Ziffern beschreiben die einzelnen Gasströme.

Beispiel

In einer gemäß der beiliegenden Zeichnung aufgebauten Vorrichtung werden Stickstoffoxide enthaltende Prozess- bzw. Abgase (Leitung 1) über Leitung 2 mit Luft und/oder über Leitung 3 mit $N_2O$-armen oder NO- und $NO_2$-haltigen Prozessgasen vermischt. Durch das Zumischen von Luft und $N_2O$-armem oder -freiem Gas bzw. Prozessgas wird die Temperaturerhöhung der

adiabatisch betriebenen $N_2O$-Zersetzung im nachfolgenden Reaktor C1 auf maximal 350°C begrenzt. Darüber hinaus wird durch Zugabe von Luft die Oxidation von NO nach vorstehend aufgeführter Gleichung (I) und somit die Bildung von Salpetersäure nach Gleichung (II), in der Absorptionskolonne K1 unterstützt. Durch die Zugabe von NO- und/oder $NO_2$-haltigen Gasen kann die Produktion von Salpetersäure ($HNO_3$) in der Absorptionskolonne K1 zusätzlich erhöht werden. In einer bevorzugten Ausführungsform können über Leitung 3 Prozessgase aus Ammoniakoxidationsreaktoren eingespeist werden.

Das Gasgemisch (der Stickstoffoxide enthaltende Gasstrom) wird sodann mittels des Verdichters (V) verdichtet. Durch den damit erhöhten Druck des Gasgemisches wird die Effektivität der nachfolgenden Absorptionskolonne K1 (Stufe A) des $N_2O$-Spaltreaktors C1 (Stufe B) und des Reaktors zur katalytischen $NO_x$-Reduktion C2 (Stufe C) in einer bevorzugten Ausführungsform beträchtlich gesteigert. Durch die freiwerdende Verdichtungswärme und die simultan ablaufende Oxidation des NO zu $NO_2$ erhöht sich die Temperatur des Gasstroms in Leitung 4 auf 250-350°C. Der Gasstrom wird in einem Gas/Gas-Wärmetauscher (WT1) mit kaltem Gasstrom aus der Absorption und anschließend im Wärmetauscher (Kühler) (WT2) mit einem geeigneten Kühlmedium wie Luft oder Kühlwasser auf 30-40°C abgekühlt.

Die $NO_2$-Absorption und Reaktion mit Wasser zu Salpetersäure wird in der nachfolgenden Absorptionskolonne K1 (Stufe A) durchgeführt, bei der der Gasstrom und das Absorptionsmittel (z.B. Wasser oder wässrige Salpetersäure) über geeignete Einbauten im Gegenstrom geführt werden und die entstehende Salpetersäure am Sumpf der Kolonne abgezogen wird.

Der von der Hauptmenge des $NO_2$ und NO befreite Gasstrom (Leitung 6) wird anschließend in einem Gas/Gas-Wärmetauscher (WT1) auf 200-300°C (Leitung 7) und im nachfolgenden Gas/Gas-Wärmetauscher (WT3) auf 450-500°C (Leitung 8) aufgewärmt. Die Entfernung des $N_2O$ erfolgt im Reaktor C1 (Stufe B), wobei die Temperatur auf bis zu 825°C steigt (Leitung 9). Der Gasstrom wird sodann im Gas/Gas-Wärmetauscher (WT3) und anschließend im Dampferzeuger (Wärmetauscher WT4) auf 260-300°C abgekühlt (Leitung 10). Sodann wird der Gasstrom im Reaktor C2 (Stufe C) durch katalytische Reduktion von verbliebenen Stickstoffoxidspuren befreit. Bei $NO_x$-Gehalten im Abgas von 1000 ppm beträgt die adiabate Temperaturerhöhung ca. 10°C. Der Gasstrom wird sodann über Leitung 11 mit einer Temperatur von 265-310°C einer Expansionsturbine (T1) zugeführt, in der er auf Atmosphärendruck entspannt und mit ca. 100°C über Leitung 12 in die Atmosphäre abgegeben wird.

Die in der Turbine (T1) erzeugte Antriebsenergie kann über eine gemeinsame Welle mm Antrieb des Verdichters (V1) genutzt werden. Die fehlende Antriebsenergie wird dann über einen zusätzlichen Motor (M) aufgebracht.

**Patentansprüche**

1. Verfahren zum Entfernen von Stickstoffoxiden aus einem diese enthaltenden Gasstrom, umfassend das Leiten des Gasstroms

    (A) durch eine Stufe zur Absorption der Stickstoffoxide außer $N_2O$ in einem Absorptionsmittel, oder Umsetzung der Stickstoffoxide außer $N_2O$ mit einem Absorptionsmittel bei einem Druck von 1,5 bis 20 bar und

    (B) durch eine Stufe zur Verminderung des $N_2O$-Gehalts, vorzugsweise unter Nutzung des im Verfahrensschritt A vorherrschenden Druckniveaus, und nach den Stufen A und B durch

    (C) eine Stufe zur Reduktion von Stickstoffoxiden außer $N_2O$,
    wobei der Gasstrom zuerst durch Stufe A und dann durch Stufe B geleitet wird.

2. Verfahren nach Anspruch 1, wobei in Stufe A als Absorptionsmittel Wasser oder eine wäßrige Lösung von Salpetersäure verwendet wird und die Stickstoffoxide außer $N_2O$, gegebenenfalls in Gegenwart von freiem Sauerstoff, zu $HNO_3$ umgesetzt werden.

3. Verfahren nach Anspruch 1 oder 2, wobei in Stufe B die Verminderung des $N_2O$-Gehaltes durch thermische Zersetzung und/oder durch katalytische Zersetzung erfolgt.

4. Verfahren nach einem der Ansprüche 1 bis 3, wobei der Gasstrom vor Stufe A mit einem Verdichter (V1) auf einen Druck von 1,5 bis 20 bar gebracht wird und nach Stufe C mittels einer Expansionsturbine (T1) auf Umgebungsdruck gebracht wird und die in der Expansionsturbine (T1) freiwerdende Energie, gegebenenfalls zusammen mit weiterer Energie (M), dem Verdichter (V1) zugeführt wird,
wobei vorzugsweise der Gasstrom vor dem Eintritt in Stufe A in einem Wärmeaustauscher (WT1) mit dem aus Stufe A austretenden Gasstrom gekühlt wird und vor dem Eintritt in Stufe B in einem Wärmeaustauscher (WT3) mit dem aus Stufe B austretenden Gasstrom erwärmt wird, wobei vorzugsweise der Gasstrom nach dem Wärmeaustauscher (WT1) vor dem Eintritt in Stufe A mit einem Wärmeaustauscher (WT2) zusätzlich weiter abgekühlt wird und der Gasstrom nach dem Wärmeaustauscher (WT3) vor dem Eintritt in Stufe C mit einem Wärmeaustauscher (WT4) zusätzlich weiter abgekühlt wird.

5. Vorrichtung zum Entfernen von Stickstoffoxiden aus einem diese enthaltenden Gasstrom, umfassend

    (a) eine Absorptionseinheit zur Absorption der Stickstoffoxide außer $N_2O$ in einem Absorptionsmittel oder zur Umsetzung der Stickstoffoxide außer $N_2O$ mit einem Absorptionsmittel

    (b) eine Verfahrenseinheit zur Verminderung des $N_2O$-Gehaltes und

    (c) eine Reduktionseinheit zur Reduktion von Stickstoffoxiden außer $N_2O$, wobei der Gasstrom nacheinander durch die Stufen (a), (b) und (c) geleitet wird.

6. Vorrichtung nach Anspruch 5, wobei in Stufe A als Absorptionsmittel Wasser oder eine wäßrige Lösung von Salpetersäure verwendet wird und die Stickstoffoxide außer $N_2O$, gegebenenfalls in Gegenwart von freiem Sauerstoff, zu $HNO_3$ umgesetzt werden.

7. Vorrichtung nach Anspruch 5 oder 6, wobei in Stufe B die Verminderung des $N_2O$-Gehaltes durch thermische und/oder katalytische Zersetzung erfolgt.

8. Vorrichtung nach einem der Ansprüche 5 bis 7, weiterhin umfassend die Vorrichtungen gemäß Anspruch 4.

9. Verwendung der Vorrichtung nach einem der Ansprüche 5 bis 8 zum Entfernen von Stickstoffoxiden aus einem diese enthaltenden Gasstrom oder zur Herstellung von $HNO_3$.

**Claims**

1. A process for removing nitrogen oxides from a gas stream comprising same, which comprises directing the gas stream

    (A) through a stage for absorbing the nitrogen oxides other than $N_2O$ in an absorbent or reacting the nitrogen oxides other than $N_2O$ with an absorbent at a pressure of from 1.5 to 20 bar, and
    (B) through a stage for lowering the $N_2O$ content, preferably by utilizing the pressure level prevailing in process step A, and, after stages A and B, through
    (C) a stage for reducing nitrogen oxides other than $N_2O$,
    wherein the gas stream is directed first through stage A and then through stage B.

2. A process as claimed in claim 1, wherein, in stage A, the absorbent used is water or an aqueous solution of nitric acid and the nitrogen oxides other than $N_2O$ are converted into $HNO_3$ in the presence or absence of free oxygen.

3. A process as claimed in claim 1 or 2, wherein, in stage B, the lowering in the $N_2O$ content is effected by thermal decomposition and/or by catalytic decomposition.

4. A process as claimed in any of claims 1 to 3, wherein the gas stream is brought upstream of stage A to a pressure of from 1.5 to 20 bar by means of a compressor (V1) and downstream of stage C to ambient pressure by means of an expansion turbine (T1) and the energy released in the expansion turbine (T1) is supplied to the compressor (V1) with or without further energy (M),
wherein the gas stream, before entry into stage A, is preferably cooled in a heat exchanger (WT1) with the gas stream emerging from stage A and, before entry into stage B, heated in a heat exchanger (WT3) with the gas stream emerging from stage B, wherein the gas stream, downstream of the heat exchanger (WT1) and before entry into stage A, is preferably additionally further cooled with a heat exchanger (WT2) and the gas stream, downstream of the heat exchanger (WT3) and before entry into stage C, is additionally further cooled with a heat exchanger (WT4).

5. Apparatus for removing nitrogen oxides from a gas stream comprising same, comprising

(a) an absorption unit for absorbing the nitrogen oxides other than $N_2O$ in an absorbent or for reacting the nitrogen oxides other than $N_2O$ with an absorbent,
(b) a process unit for lowering the $N_2O$ content and
(c) a reduction unit for reducing nitrogen oxides other than $N_2O$, wherein the gas stream is directed successively through the stages (a), (b) and (c).

6. Apparatus as claimed in claim 5, wherein, in stage A, the absorbent used is water or an aqueous solution of nitric acid and the nitrogen oxides other than $N_2O$ are converted into $HNO_3$ in the presence or absence of free oxygen.

7. Apparatus as claimed in claim 5 or 6, wherein, in stage B, the lowering in the $N_2O$ content is effected by thermal and/or catalytic decomposition.

8. Apparatus as claimed in any of claims 5 to 7 further comprising the apparatus of claim 4.

9. The use of the apparatus of any of claims 5 to 8 for removing nitrogen oxides from a gas stream comprising same or for producing $HNO_3$.

## Revendications

1. Procédé pour l'élimination des oxydes d'azote d'un courant gazeux en contenant, comprenant le passage du courant gazeux

(A) par une première étape pour l'absorption des oxydes d'azote excepté $N_2O$ dans un agent d'absorption, ou la réaction des oxydes d'azote excepté $N_2O$ avec un agent d'absorption sous une pression de 1,5 à 20 bar et
(B) par une deuxième étape pour la diminution de la teneur en $N_2O$, de préférence en utilisant le niveau de pression régnant dans le stade opératoire A, et après les étapes A et B par
(C) une étape pour la réduction des oxydes d'azote excepté $N_2O$,
tandis qu'on fait passer le courant gazeux d'abord par l'étape A et ensuite par l'étape B.

2. Procédé selon la revendication 1, dans lequel on utilise comme agent d'absorption dans l'étape A de l'eau ou une solution aqueuse d'acide nitrique et on fait réagir les oxydes d'azote à l'exception de $N_2O$, éventuellement en présence d'oxygène libre, pour former du $HNO_3$.

3. Procédé selon la revendication 1 ou 2, dans lequel dans l'étape B la diminution de la teneur en $N_2O$ s'effectue par décomposition thermique et/ou par décomposition catalytique.

4. Procédé selon l'une des revendications 1 à 3, dans lequel le courant gazeux est amené avant l'étape A au moyen d'un condenseur à une pression de 1,5 à 20 bar (V1) et après l'étape C au moyen d'une turbine d'expansion (T1) à la pression ambiante, et l'énergie libérée dans la turbine d'expansion (T1) est acheminée au condenseur (V1) , éventuellement conjointement avec de l'énergie (M) autre,
tandis que le courant gazeux est de préférence refroidi avant son entrée dans l'étape A dans un échangeur de chaleur (WT1) avec le courant gazeux sortant de l'étape A, et est chauffé avant son entrée dans l'étape B dans un échangeur de chaleur (WT3) avec le courant gazeux sortant de l'étape B, et tandis que le courant gazeux est de préférence refroidi encore plus fortement après l'échangeur de chaleur (WT1) avant son entrée dans l'étape A avec un échangeur de chaleur (WT2), et le courant gazeux est encore refroidi plus fortement après l'échangeur de chaleur (WT3) avant son entrée dans l'étape C avec un échangeur de chaleur (WT4).

5. Dispositif pour l'élimination des oxydes d'azote d'un courant gazeux en contenant, comprenant

> (a) une unité d'absorption pour l'absorption des oxydes d'azote à l'exception de $N_2O$ dans un agent d'absorption ou pour la réaction des oxydes d'azote à l'exception de $N_2O$ avec un agent d'absorption
> (b) une unité de traitement pour l'abaissement de la teneur en $N_2O$ et
> (c) une unité de réduction pour la réduction des oxydes d'azote à l'exception de $N_2O$,
> dans lequel on fait passer le courant gazeux successivement à travers les étages (a), (b) et (c).

6. Dispositif selon la revendication 5, dans lequel on utilise dans l'étape A comme agent d'absorption de l'eau ou une solution aqueuse d'acide nitrique et on convertit en $HNO_3$ les oxydes d'azote à l'exception de $N_2O$, éventuellement en présence d'oxygène libre.

7. Dispositif selon la revendication 5 ou 6, dans lequel dans l'étape B on réalise l'abaissement de la teneur en $N_2O$ par décomposition thermique et/ou catalytique.

8. Dispositif selon l'une des revendications 5 à 7, englobant en outre les appareillages selon la revendication 4.

9. Utilisation du dispositif selon l'une des revendications 5 à 8 pour l'élimination des oxydes d'azote d'un courant gazeux les contenant ou pour la préparation de $HNO_3$.

# Abbildung 1

EP 0 859 659 B1